(19) Europäisches Patentamt
European Patent Office
Office européen des brevets

(11) **EP 3 813 623 B1**

(12) **EUROPEAN PATENT SPECIFICATION**

(45) Date of publication and mention
of the grant of the patent:
**02.04.2025 Bulletin 2025/14**

(21) Application number: **19825981.4**

(22) Date of filing: **12.06.2019**

(51) International Patent Classification (IPC):
***G01D 5/00*** *(2006.01)*

(52) Cooperative Patent Classification (CPC):
**A47L 9/2852; A47L 9/2894; G05D 1/0246;
G05D 1/0274; G05D 1/0291;** A47L 2201/04

(86) International application number:
**PCT/KR2019/007065**

(87) International publication number:
**WO 2020/004834 (02.01.2020 Gazette 2020/01)**

(54) **A PLURALITY OF AUTONOMOUS CLEANERS AND A CONTROLLING METHOD FOR THE SAME**

EINE VIELZAHL VON AUTONOMEN REINIGERN UND STEUERVERFAHREN DAFÜR

PLURALITÉ D'APPAREILS DE NETTOYAGE AUTONOMES ET PROCÉDÉ DE COMMANDE DE TELS APPAREILS DE NETTOYAGE AUTONOMES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.06.2018 KR 20180074311**

(43) Date of publication of application:
**05.05.2021 Bulletin 2021/18**

(73) Proprietor: **LG Electronics Inc.**
**Seoul 07336 (KR)**

(72) Inventors:
• **SHIN, Yongmin**
**Seoul 08592 (KR)**

• **CHO, Ilsoo**
**Seoul 08592 (KR)**

(74) Representative: **Ter Meer Steinmeister & Partner
Patentanwälte mbB
Nymphenburger Straße 4
80335 München (DE)**

(56) References cited:
EP-A1- 3 718 704        WO-A2-2017/188708
JP-A- 2004 133 882      JP-A- 2015 147 091
JP-B2- 3 986 310        KR-A- 20130 120 307
KR-A- 20160 036 008     US-A1- 2018 074 508

## Description

The present disclosure relates to a plurality of autonomous cleaners capable of performing cleaning in collaboration.

A cleaner is a device that performs cleaning by sucking or mopping dust or foreign materials. In general, the cleaner performs a cleaning function for a floor, and includes wheels for movement. In general, the wheels are rolled by external force applied to the cleaner main body to move the cleaner main body relative to the floor.

In recent years, researches on an autonomous cleaner such as a robot cleaner that performs cleaning while traveling on its own without a user's manipulation, and a cleaner that moves on its own along a nozzle moved by a user's manipulation have been actively carried out.

Such an autonomous cleaner is provided with a rechargeable battery, and provided with an obstacle sensor that can avoid an obstacle while traveling so that it can move and clean by itself. On the other hand, a plurality of autonomous cleaners may be used at the same time when the cleaning area is wide or when the functions are different (e.g., a dry cleaner performing dust or foreign matter suction, or a wet cleaner performing only mopping).

In order to efficiently perform collaborative cleaning using a plurality of autonomous cleaners as described above, the plurality of autonomous cleaners must obtain their relative positions, respectively. To this end, it may be possible to obtain relative positions to each other using additional position sensors such as ultrasonic waves and radar, but there is a disadvantage that it is difficult to obtain the relative positions when a separation distance between the plurality of autonomous cleaners increases. In order to overcome such a disadvantage, even in case where a plurality of autonomous cleaners are far apart, when high performance sensors capable of accurately recognizing positions to each other are mounted thereon, there is a disadvantages that the cost of the whole product increases.

WO 2017/188708 A2 relates to a technique of learning, by a mobile robot, a map using self-generated information and information received from another mobile robot. A map learning method of a mobile robot according to the present invention comprises the steps of generating node information on the basis of displacement measured during the traveling of a mobile robot; and receiving node group information of another mobile robot. The mobile robot comprises: a traveling unit for moving a main body; a traveling displacement measuring unit for measuring a traveling displacement; a receiving unit for receiving node group information of another traveling robot; and a control unit for generating node information on a map on the basis of the traveling displacement and adding the node group information of the another mobile robot to the map.

US 2018/074508 A1 presents a method of operating a mobile robot including generating a segmentation map defining respective regions of a surface based on occupancy data that is collected by a mobile robot responsive to navigation of the surface, identifying sub-regions of at least one of the respective regions as non-clutter and clutter areas, and computing a coverage pattern based on identification of the sub-regions. The coverage pattern indicates a sequence for navigation of the non-clutter and clutter areas, and is provided to the mobile robot. Responsive to the coverage pattern, the mobile robot sequentially navigates the non-clutter and clutter areas of the at least one of the respective regions of the surface in the sequence indicated by the coverage pattern. Related methods, computing devices, and computer program products are also discussed.

## Disclosures of Invention

### Technical Problem

An aspect of the present disclosure is to provide a plurality of autonomous cleaners capable of recognizing the relative positions of other cleaners in a designated space even without mounting additional sensors for obtaining positions to each other so as to perform efficient collaborative cleaning, and a control method thereof.

Furthermore, another aspect of the present disclosure is to provide a plurality of autonomous cleaners capable of obtaining relative positions to each other even without additionally sharing a feature map (SLAM) even when the plurality of autonomous cleaners use different cleaning maps for the same space, and a control method thereof.

### Solution to Problem

One or more objects of the present technique are achieved by the invention set out by the features of the independent claim(s).

An autonomous cleaner according to an embodiment of the present disclosure may include a traveling unit configured to move a main body; a memory in which a first obstacle map for a cleaning area is stored; a communication unit communicating with a second cleaner; and a controller configured to perform calibration on a second obstacle map received based on a coordinate system of the stored first obstacle map when the second obstacle map for the cleaning area is received from the second cleaner, wherein the controller recognizes the position of the second cleaner using the second obstacle map in which calibration has been carried out, and transmits a cleaning command generated based on the position of the second cleaner and the position information of the main body to the second cleaner.

Furthermore, according to an embodiment, the controller may calculate a transformation value for scaling, rotating, or moving at least one of the first and second obstacle maps to match the coordinate systems of the first and second obstacle maps so as to perform calibration on the second obstacle map.

Furthermore, according to an embodiment, the position information of the main body may also be displayed on a second obstacle map in which the calibration has been carried out.

Furthermore, according to an embodiment, the cleaning command transmitted to the second cleaner may be a cleaning command for a specific area selected based on the position information of the main body, the obstacle information of the first or second obstacle map, and the position information of the second cleaner or a cleaning command that follows the traveling path of the first cleaner.

Furthermore, according to an embodiment, the controller may recognize the position coordinate of the second cleaner corresponding to a wireless signal received from the second cleaner using the first obstacle map when the calibration is completed.

A plurality of autonomous cleaners according to another embodiment of the present disclosure discloses a plurality of autonomous cleaners including a first cleaner and a second cleaner, wherein the first cleaner receives an obstacle map for a cleaning area from the second cleaner, performs calibration on the received obstacle map based on

the coordinate system of its own prestored obstacle map, and transmits transformation data corresponding to the calibration to the second cleaner, and the second cleaner applies the transformation data to its own obstacle map, and recognizes the position coordinate corresponding to a wireless signal received from the first cleaner to generate a cleaning command.

Furthermore, according to an embodiment, the first cleaner may scale, rotate or move at least one of the first and second obstacle maps to match the coordinate systems of the first and second obstacle maps so as to generate the transformation data.

As described above, according to the plurality of autonomous cleaners according to an embodiment of the present disclosure, the plurality of autonomous cleaners may recognize the positions of other cleaners in a designated space even without mounting position sensors to perform efficient collaborative cleaning. Furthermore, the plurality of autonomous cleaners may easily obtain relative positions to each other without additionally sharing a feature map (SLAM) even when using different cleaning maps for the same space due to different types thereof. Accordingly, the plurality of autonomous cleaners may efficiently modify or update a collaborative scenario according to the relative positions thereof even while performing collaborative cleaning.

## Advantageous Effects of Invention

As described above, according to the plurality of autonomous cleaners according to an embodiment of the present disclosure, the plurality of autonomous cleaners may recognize the positions of other cleaners in a designated space even without mounting position sensors to perform efficient collaborative cleaning. Furthermore, the plurality of autonomous cleaners may easily obtain relative positions to each other without additionally sharing a feature map (SLAM) even when using different cleaning maps for the same space due to different types thereof. Accordingly, the plurality of autonomous cleaners may efficiently modify or update a collaborative scenario according to the relative positions thereof even while performing collaborative cleaning.

## Brief Description of Drawings

The accompanying drawings, which are included to provide a further understanding of the invention and are incorporated in and constitute a part of this specification, illustrate embodiments of the invention and together with the description serve to explain the principles of the invention. In the drawings:

FIG. 1 is a perspective view showing an example of an autonomous cleaner according to the present disclosure.
FIG. 2 is a plan view of the autonomous cleaner illustrated in FIG. 1.
FIG. 3 is a side view of the autonomous cleaner illustrated in FIG. 1.
FIG. 4 is a block diagram showing exemplary components of an autonomous cleaner according to an embodiment of the present disclosure.
FIG. 5a is a conceptual view illustrating network communication between a plurality of autonomous cleaners according to an embodiment of the present disclosure, and
FIG. 5b is a conceptual view illustrating an example of the network communication of FIG. 5a.
FIG. 5c is a conceptual view illustrating follow-up traveling among a plurality of autonomous cleaners according to an embodiment of the present disclosure.
FIG. 6 is a representative flowchart for explaining a method of allowing a plurality of autonomous cleaners to recognize relative positions to each other so as to perform collaborative/follow-up cleaning according to an embodiment of the present disclosure.
FIG. 7 is an exemplary view in which a plurality of autonomous cleaners perform cleaning while communicating with different obstacle maps displayed with their own positions, respectively, according to an embodiment of the present disclosure.
FIG. 8 is a flowchart for explaining a calibration process for unifying coordinate systems of different obstacle maps according to an embodiment of the present disclosure.
FIGS. 9a, 9b, 9c, 9d, and 9e are exemplary conceptual views showing a process of scaling, rotating, moving and matching different obstacle maps according to an embodiment of the present disclosure. FIG. 10 is a flowchart for explaining another method of allowing a plurality of autonomous cleaners to recognize relative positions to each other so as to perform collaborative/follow-up cleaning according to an embodiment of the present disclosure.

## Mode for the Invention

Hereinafter, an autonomous cleaner associated with the present disclosure will be described in detail with reference to the accompanying drawings.

Hereinafter, description will be given in detail of embodiments disclosed herein. Technical terms used in this specification are merely used for explaining specific embodiments, and should not be constructed to limit the scope of the technology disclosed herein.

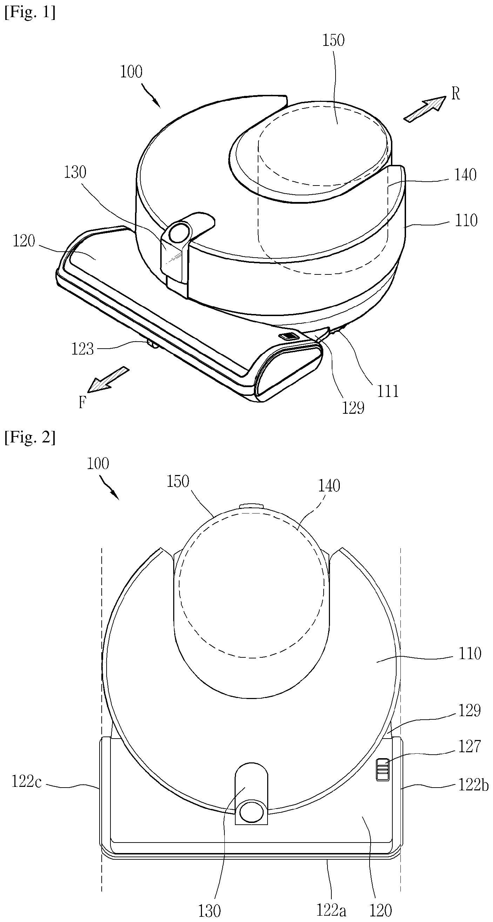

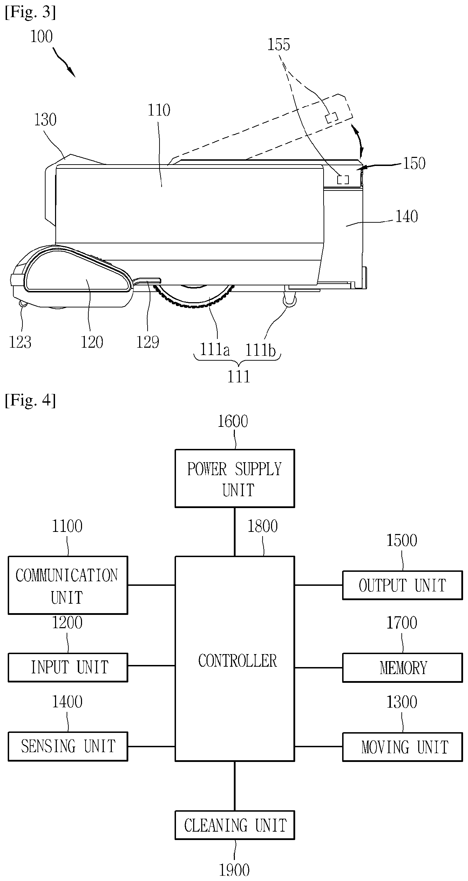

FIG. 1 is a perspective view illustrating an example of an autonomous cleaner 100 according to the present disclosure, FIG. 2 is a plan view of the autonomous cleaner 100 illustrated in FIG. 1, and FIG. 3 is a side view of the autonomous cleaner 100 illustrated in FIG. 1.

In this specification, a mobile robot, an autonomous cleaner, and a cleaner that performs autonomous traveling may be used in the same sense. In this specification, a plurality of autonomous cleaners may include at least part of configurations illustrated in FIGS. 1 to 3.

Referring to FIGS. 1 through 3, the autonomous cleaner 100 performs a function of cleaning a floor while traveling on a predetermined area by itself. Cleaning of a floor mentioned here includes sucking dust (including foreign matter) on the floor or mopping the floor.

The autonomous cleaner 100 may include a cleaner main body 110, a cleaning unit 120, a sensing unit 130, and a dust container 140.

The cleaner main body 110 is provided with various components in addition to a controller (not illustrated) for controlling the autonomous cleaner 100. In addition, the cleaner main body 110 is provided with a wheel unit 111 for the traveling of the autonomous cleaner 100. The autonomous cleaner 100 may move forward, backward, leftward and rightward by the wheel unit 111.

Referring to FIG. 3, the wheel unit 111 includes main wheels 111a and a sub wheel 111b.

The main wheels 111a are provided on both sides of the cleaner main body 110 and configured to be rotatable in one direction or another direction according to a control signal of the control unit. Each of the main wheels 111a may be configured to be drivable independently from each other. For example, each main wheel 111a may be driven by a different motor. Or each main wheel 111a may be driven by a plurality of different axes provided in one motor.

The sub wheel 111b is configured to support the cleaner body 110 along with the main wheel 111a and assist the traveling of the autonomous cleaner 100 by the main wheel 111a. The sub wheel 111b may also be provided on a cleaning unit 120 to be described later.

The controller is configured to control the driving of the wheel unit 111 in such a manner that the autonomous cleaner 100 autonomously travels on the floor.

Meanwhile, a battery (not shown) for supplying power to the autonomous cleaner 100 is mounted on the cleaner body 110. The battery may be configured to be rechargeable, and configured to be detachable from a bottom portion of the cleaner body 110.

In FIG. 1, a cleaning unit 120 may be disposed in a protruding form from one side of the cleaner main body 110, so as to suck air containing dust or mop an area. The one side may be a side where the cleaner main body 110 travels in a forward direction F, that is, a front side of the cleaner main body 110.

In this drawing, the cleaning unit 120 is shown having a shape protruding from one side of the cleaner main body 110 to front and both left and right sides. Specifically, a front end portion of the cleaning unit 120 is disposed at a position spaced forward apart from the one side of the cleaner main body 110, and left and right end portions of the cleaning unit 120 are disposed at positions spaced apart from the one side of the cleaner main body 110 in the right and left directions.

As the cleaner main body 110 is formed in a circular shape and both sides of a rear end portion of the cleaning unit 120 protrude from the cleaner main body 110 to both left and right sides, empty spaces, namely, gaps may be formed between the cleaner main body 110 and the cleaning unit 120. The vacant space is a space between both left and right end portions of the cleaner body 110 and both left and right end portions of the cleaning unit 120, and has a shape recessed in an inward direction of the autonomous cleaner 100.

When an obstacle is caught in the vacant space, the autonomous cleaner 100 may be blocked by an obstacle not to move. In order to prevent this, a cover member 129 may be disposed to cover at least part of the vacant space.

The cover member 129 may be provided on the cleaner main body 110 or the cleaning unit 120. According to the present embodiment, it is shown that the cover member 129 is formed in a protruding manner on both sides of a rear end portion of the cleaning unit 120, and disposed to cover an outer peripheral surface of the cleaner body 110.

The cover member 129 is disposed to fill at least part of the empty space, that is, the empty space between the cleaner main body 110 and the cleaning unit 120. This may result in realizing a structure capable of preventing an obstacle from being caught in the empty space, or to easily escape an obstacle even if the obstacle is caught in the empty space.

The cover member 129 protruding from the cleaning unit 120 may be supported on the outer circumferential surface of the cleaner main body 110.

The cover member 129 may be supported on a rear portion of the cleaning unit 120 if the cover member 129 protrudes from the cleaner main body 110. According to this structure, when the cleaning unit 120 is impacted due to colliding with an obstacle, a part of the impact is transferred to the cleaner main body 110 so as to be dispersed.

The cleaning unit 120 may be detachably coupled to the cleaner main body 110. When the cleaning unit 120 is detached from the cleaner main body 110, a mop module (not shown) may be detachably coupled to the cleaner main body 110 in place of the detached cleaning unit 120.

Accordingly, the user can mount the cleaning unit 120 on the cleaner main body 110 when the user wishes to remove dust on the floor, and may mount the mop module on the cleaner main body 110 when the user wants to mop the floor.

When the cleaning unit 120 is mounted on the cleaner main body 110, the mounting may be guided by the cover member 129 described above. In other words, as the cover member 129 is disposed to cover an outer circumferential surface of the cleaner main body 110 to determine a relative position of the cleaning unit 120 with respect to the cleaner main body 110.

The cleaning unit 120 may be provided with a castor 123. The castor 123 is configured to assist the traveling of the autonomous cleaner 100, and also support the autonomous cleaner 100.

The cleaner main body 110 is provided with the sensing unit 130. As illustrated, the sensing unit 130 may be disposed on one side of the cleaner main body 110 where the cleaning unit 120 is located, that is, on a front side of the cleaner main body 110.

The sensing unit 130 may be disposed to overlap the cleaning unit 120 in an up and down direction of the cleaner main body 110. The sensing unit 130 is disposed at an upper portion of the cleaning unit 120 to sense an obstacle or geographic feature in front of the autonomous cleaner 100 so that the cleaning unit 120 positioned at the forefront of the autonomous cleaner 100 does not collide with the obstacle.

The sensing unit 130 may be configured to additionally perform another sensing function other than the sensing function.

By way of example, the sensing unit 130 may include a camera 131 for acquiring surrounding images. The camera 131 may include a lens and an image sensor. The camera 131 may convert a surrounding image of the cleaner main body 110 into an electrical signal that can be processed by the control unit. For example, the camera 131 may transmit an electrical signal corresponding to an upward image to the control unit. The electrical signal corresponding to the upward image may be used by the control unit to detect the position of the cleaner main body 110.

In addition, the sensing unit 130 may detect obstacles such as walls, furniture, and cliffs on a traveling surface or a traveling path of the autonomous cleaner 100. Also, the sensing unit 130 may sense presence of a docking device that performs battery charging. Also, the sensing unit 130 may detect ceiling information so as to map a traveling area or a cleaning area of the autonomous cleaner 100.

The cleaner main body 110 is provided with a dust container 140 detachably coupled thereto for separating and collecting dust from sucked air.

The dust container 140 is provided with a dust container cover 150 which covers the dust container 140. In an embodiment, the dust container cover 150 may be coupled to the cleaner main body 110 by a hinge to be rotatable. The dust container cover 150 may be fixed to the dust container 140 or the cleaner main body 110 to keep covering an upper surface of the dust container 140. The dust container 140 may be prevented from being separated from the cleaner main body 110 by the dust container cover 150 when the dust container cover 150 is disposed to cover the upper surface of the dust container 140.

A part of the dust container 140 may be accommodated in a dust container accommodating portion and another part of the dust container 140 protrudes toward the rear of the cleaner main body 110 (i.e., a reverse direction R opposite to a forward direction F).

The dust container 140 is provided with an inlet through which air containing dust is introduced and an outlet through which air separated from dust is discharged. The inlet and the outlet communicate with each other through an opening 155 formed through an inner wall of the cleaner main body 110 when the dust container 140 is mounted on the cleaner main body 110. Thus, an intake passage and an exhaust passage inside the cleaner main body 110 may be formed.

According to such connection, air containing dust introduced through the cleaning unit 120 flows into the dust container 140 through the intake passage inside the cleaner main body 110 and the air is separated from the dust while passing through a filter and cyclone of the dust container 140. Dust is collected in the dust box 140, and air is discharged from the dust box 140 and then discharged to the outside through the discharge port 112 in the cleaner body 110 and finally through the discharge port 112.

An embodiment related to the components of the autonomous cleaner 100 will be described below with reference to FIG. 4.

The autonomous cleaner 100 or the mobile robot according to an embodiment of the present disclosure may include a communication unit 1100, an input unit 1200, a traveling unit 1300, a sensing unit 1400, an output unit 1500, a power supply unit 1600, a memory 1700, a controller 1800, and a cleaning unit 1900, or a combination thereof.

Here, it is needless to say that the components shown in FIG. 4 are not essential, and thus an autonomous cleaner having more or fewer components than shown in FIG. 4 may be implemented. Also, as described above, each of a plurality of autonomous cleaners described in the present disclosure may equally include only some of components to be described below. In other words, a plurality of autonomous cleaners may include different components.

Hereinafter, each component will be described.

First, the power supply unit 1600 includes a battery that can be charged by an external commercial power supply, and supplies power to the mobile robot. The power supply unit 1600 supplies driving power to each of the components included in the mobile robot to supply operating power required for the mobile robot to travel or perform a specific function.

Here, the controller 1800 may sense the remaining power of the battery, and control the battery 1800 to move power to a charging base connected to the external commercial power source when the remaining power is insufficient, and thus a charge current may be supplied from the charging base to charge the battery. The battery may be connected to a battery sensing portion so that a remaining power level and a charging state can be transmitted to the control unit 1800. The output unit 1500 may display the remaining battery level under the control of the control unit.

The battery may be located in a lower portion of the center of the autonomous cleaner or may be located at either one of the left and right sides. In the latter case, the mobile robot may further include a balance weight for eliminating a weight bias of the battery.

The controller 1800 performs a role of processing information based on an artificial intelligence technology and may include at least one module for performing at least one of learning of information, inference of information, perception of information, and processing of a natural language.

The controller 1800 may use a machine learning technology to perform at least one of learning, inference and processing of a large amount of information (big data), such as information stored in the cleaner, environment information around the cleaner, information stored in a communicable external storage, and the like. Furthermore, the controller 1800 may predict (or infer) at least one executable operation of the cleaner based on information learned using the machine learning technology, and control the cleaner to execute the most feasible operation among the at least one predicted operation.

The machine learning technology is a technology that collects and learns a large amount of information based on at least one algorithm, and determines and predicts information based on the learned information. The learning of information is an operation of grasping characteristics of information, rules and judgment criteria, quantifying a relation between information and information, and predicting new data using the quantified patterns.

Algorithms used by the machine learning technology may be algorithms based on statistics, for example, a decision tree that uses a tree structure type as a prediction model, an artificial neural network that mimics neural network structures and functions of living creatures, genetic programming based on biological evolutionary algorithms, clustering of distributing observed examples to a subset of clusters, a Monte Carlo method of computing function values as probability using randomly-extracted random numbers, and the like.

As one field of the machine learning technology, deep learning is a technology of performing at least one of learning, determining, and processing information using a deep neural network (DNN) algorithm. The deep neural network (DNN) may have a structure of linking layers and transferring data between the layers. This deep learning technology may be employed to learn a vast amount of information through the deep neural network (DNN) using a graphic processing unit (GPU) optimized for parallel computing.

The controller 1800 may use training data stored in an external server or a memory, and may include a learning engine for detecting a characteristic for recognizing a predetermined object. Here, characteristics for recognizing an object may include the size, shape, and shade of the object.

Specifically, when the control unit 1800 inputs a part of images acquired through the camera provided on the cleaner into the learning engine, the learning engine may recognize at least one object or organism included in the input images.

When the learning engine is applied to traveling of the cleaner, the control unit 1800 can recognize whether or not an obstacle such as a chair leg, a fan, and a specific shape of balcony gap, which obstruct the running of the cleaner, exists around the cleaner. This may result in enhancing efficiency and reliability of the traveling of the cleaner.

On the other hand, the learning engine may be mounted on the control unit 1800 or on an external server. When the learning engine is mounted on an external server, the control unit 1800 may control the communication unit 1100 to transmit at least one image to be analyzed, to the external server.

The external server may input the image transmitted from the cleaner into the learning engine and thus recognize at least one object or organism included in the image. In addition, the external server may transmit information related to the recognition result back to the cleaner. In this case, the information related to the recognition result may include information related to the number of objects included in the image to be analyzed and a name of each object.

On the other hand, the traveling unit 1300 may include a motor, and operate the motor to bidirectionally rotate left and right main wheels, so that the main body can rotate or move. At this time, the left and right main wheels may be independently moved. The traveling unit 1300 may advance the main body of the mobile robot forward, backward, left, right, curvedly, or in place.

Meanwhile, the input unit 1200 receives various control commands for the autonomous cleaner from the user. The input unit 1200 may include one or more buttons, for example, the input unit 1200 may include an OK button, a set button, and the like. The OK button is a button for receiving a command for confirming sensing information, obstacle information, position information, and map information from the user, and the set button is a button for receiving a command for setting the information from the user.

In addition, the input unit 1200 may include an input reset button for canceling a previous user input and receiving a user input again, a delete button for deleting a preset user input, a button for setting or changing an operation mode, a button for receiving a command to be restored to the charging base, and the like.

Furthermore, the input unit 1200, such as a hard key, a soft key, a touch pad, or the like, may be installed on a upper portion of the mobile robot. In addition, the input unit 1200 may have a form of a touch screen along with the output unit 1500.

On the other hand, the output unit 1500 may be installed on an upper portion of the mobile robot. Of course, the installation location and installation type may vary. For example, the output unit 1500 may display a battery state, a traveling mode, and the like on the screen.

In addition, the output unit 1500 may output state information inside the mobile robot detected by the sensing unit 1400, for example, a current state of each configuration included in the mobile robot. Moreover, the output unit 1500 may display external state information, obstacle information, position information, map information, and the like detected by the sensing unit 1400 on the screen. The output unit 1500 may be formed with any one of a light emitting diode (LED), a liquid crystal display (LCD), a plasma display panel, and an organic light emitting diode (OLED).

The output unit 1500 may further include a sound output device for audibly outputting an operation process or an operation result of the mobile robot performed by the controller 1800. For example, the output unit 1500 may output a warning sound to the outside in accordance with a warning signal generated by the controller 1800.

In this case, the audio output module (not shown) may be means, such as a beeper, a speaker or the like for outputting sounds, and the output unit 1500 may output sounds to the outside through the audio output module using audio data or message data having a predetermined pattern stored in the memory 1700.

Accordingly, the mobile robot according to an embodiment of the present disclosure may output environment information on a traveling area on the screen or output it as sound. According to another embodiment, the mobile robot may transmit map information or environment information to a terminal device through the communication unit 1100 to output a screen or sound to be output through the output unit 1500.

The memory 1700 stores a control program for controlling or driving the autonomous cleaner and the resultant data. The memory 1700 may store audio information, image information, obstacle information, position information, map information, and the like. Furthermore, the memory 1700 may store information related to a traveling pattern.

The memory 1700 mainly uses a nonvolatile memory. Here, the non-volatile memory (NVM, NVRAM) is a storage device capable of continuously storing information even when power is not supplied thereto, and for an example, the non-volatile memory may be a ROM, a flash memory, a magnetic computer storage device (e.g., a hard disk, a diskette drive, a magnetic tape), an optical disk drive, a magnetic RAM, a PRAM, and the like.

Meanwhile, the sensing unit 1400 may include at least one of an external signal detection sensor, a front detection sensor, a cliff detection sensor, a two-dimensional camera sensor, and a three-dimensional camera sensor.

The external signal detection sensor may sense an external signal of the mobile robot. The external signal detection sensor may be, for example, an infrared ray sensor, an ultrasonic sensor, a radio frequency (RF) sensor, or the like.

The mobile robot may receive a guide signal generated by the charging base using the external signal detection sensor to check the position and direction of the charging base. At this time, the charging base may transmit a guide signal indicating the direction and the distance to allow the mobile robot to return. In other words, the mobile robot may receive a signal transmitted from the charging base to determine a current position, set a moving direction, and return to the charging base.

On the other hand, the front detection sensor may be installed at predetermined intervals at a front side of the mobile robot, specifically along a lateral outer circumferential surface of the mobile robot. The front sensor is located on at least one side surface of the mobile robot to detect an obstacle in front of the mobile robot. The front sensor may detect an object, especially an obstacle, existing in a moving direction of the mobile robot and transmit detection information to the controller 1800. In other words, the front sensor may sense a protrusion, a household appliance, furniture, a wall surface, a wall corner, and the like, on the moving path of the mobile robot to transmit the information to the controller 1800.

For example, the frontal sensor may be an infrared ray (IR) sensor, an ultrasonic sensor, an RF sensor, a geomagnetic sensor, or the like, and the mobile robot may use one type of sensor as the front sensor or two or more types of sensors if necessary.

For an example, the ultrasonic sensors may be mainly used to sense a distant obstacle in general. The ultrasonic sensor may include a transmitter and a receiver, and the controller 1800 may determine whether or not there exists an obstacle based on whether or not ultrasonic waves radiated through the transmitter is reflected by the obstacle or the like and received at the receiver, and calculate a distance to the obstacle using the ultrasonic emission time and ultrasonic reception time.

Furthermore, the controller 1800 may compare ultrasonic waves emitted from the transmitter and ultrasonic waves received at the receiver to detect information related to a size of the obstacle. For example, the controller 1800 may determine that the larger the obstacle is, the more ultrasonic waves are received at the receiver.

In one embodiment, a plurality of (for example, five) ultrasonic sensors may be provided along a lateral outer circumferential surface at a front side of the mobile robot. At this time, the ultrasonic sensors may preferably be installed on the front surface of the mobile robot in a manner that the transmitter and the receiver are alternately arranged.

In other words, the transmitters may be spaced apart from the front center of the main body to the left and right sides, and one or two (or more) transmitters may be disposed between the receivers to form a receiving area of *?*ultrasonic signals reflected from an obstacle or the like. With this arrangement, the receiving area may be expanded while reducing the number of sensors. A transmission angle of ultrasonic waves may maintain a range of angles that do not affect different signals to prevent a crosstalk phenomenon. Furthermore, the receiving sensitivities of the receivers may be set to be different from each other.

In addition, the ultrasonic sensor may be installed upward by a predetermined angle so that the ultrasonic waves emitted from the ultrasonic sensor are output upward. In this instance, the ultrasonic sensor may further include a predetermined blocking member to prevent the ultrasonic waves from being radiated downward.

On the other hand, as described above, the front sensor may be implemented by using two or more types of sensors together, and thus the front sensor may use any one of an IR sensor, an ultrasonic sensor, an RF sensor and the like.

For example, the front detection sensor may include an infrared sensor as a different type of sensor other than the ultrasonic sensor.

The infrared sensor may be installed on an outer circumferential surface of the mobile robot together with the ultrasonic sensor. The infrared sensor may also sense an obstacle existing at the front or the side to transmit obstacle information to the controller 1800. In other words, the infrared sensor may sense a protrusion, a household appliance, a furniture, a wall surface, a wall corner, and the like, on the moving path of the mobile robot to transmit the information to the controller 1800. Therefore, the mobile robot may move within a specific region without collision with the obstacle.

On the other hand, a cliff detection sensor (or cliff sensor) may sense an obstacle on the floor supporting the main body of the mobile robot mainly using various types of optical sensors.

In other words, the cliff detection sensor may be installed on a rear surface of the bottom mobile robot, but may of course be installed in a different position depending on the type of the mobile robot. The cliff detection sensor is a sensor located on a back surface of the mobile robot to sense an obstacle on the floor, and the cliff detection sensor may be an infrared sensor, an ultrasonic sensor, an RF sensor, a PSD (Position Sensitive Detector) sensor, or the like, which is provided with a transmitter and a receiver such as the obstacle detection sensor.

For an example, any one of the cliff detection sensors may be installed in front of the mobile robot, and the other two cliff detection sensors may be installed relatively behind.

For example, the cliff detection sensor may be a PSD sensor, but may also be configured with a plurality of different kinds of sensors.

The PSD sensor detects a short and long-distance position of incident light with one p-n junction using a semiconductor surface resistance. The PSD sensor includes a one-dimensional PSD sensor that detects light only in one axial direction, and a two-dimensional PSD sensor that detects a light position on a plane. Both of the PSD sensors may have a pin photodiode structure. The PSD sensor is a type of infrared sensor that uses infrared rays to transmit infrared rays and then measure an angle of infrared rays reflected from and returned back to an obstacle so as to measure a distance. In other words, the PSD sensor calculates a distance from the obstacle by using the triangulation method.

The PSD sensor includes a light emitter that emits infrared rays to an obstacle and a light receiver that receives infrared rays that are reflected and returned from the obstacle, and is configured typically as a module type. When an obstacle is detected by using the PSD sensor, a stable measurement value may be obtained irrespective of reflectivity and color difference of the obstacle.

The cleaning unit 1900 cleans a designated cleaning area according to a control command transmitted from the controller 1800. The cleaning unit 1900 scatters dust in the vicinity through a brush (not shown) that scatters dust in a designated cleaning area, and then drives the suction fan and the suction motor to suck the scattered dust. In addition, the cleaning unit 1900 may perform mopping in a designated cleaning area according to the replacement of the configuration.

Furthermore, the controller 1800 may measure an infrared ray angle between a light signal of infrared ray emitted by the cliff detection sensor toward the ground and a reflection signal reflected and received from an obstacle, so as to detect a cliff and analyze a depth of the cliff.

Meanwhile, the controller 1800 may determine whether to pass a cliff or not according to a ground state of the detected cliff by using the cliff detection sensor, and decide whether to pass the cliff or not according to the determination result. For example, the controller 1800 determines presence or non-presence of a cliff and a depth of the cliff through the cliff sensor, and then allows the mobile robot to pass through the cliff only when a reflection signal is detected through the cliff sensor.

As another example, the controller 1800 may also determine lifting of the mobile robot using the cliff sensor.

On the other hand, the two-dimensional camera sensor is provided on one side of the mobile robot to acquire image information related to the surroundings of the main body during movement.

An optical flow sensor converts a downward image input from an image sensor provided in the sensor to generate image data in a predetermined format. The generated image data may be stored in the memory 1700.

Furthermore, one or more light sources may be installed adjacent to the optical flow sensor. The one or more light sources irradiate light to a predetermined region of the bottom surface captured by the image sensor. In other words, when the mobile robot moves in a specific region along the bottom surface, a predetermined distance is maintained between the image sensor and the bottom surface when the bottom surface is flat. On the other hand, when the mobile robot moves on a bottom surface having a nonuniform surface, the robot moves away from the bottom surface by more than a predetermined distance due to the irregularities of the bottom surface and obstacles. At this time, the one or more light sources may be controlled by the controller 1800 to adjust an amount of light to be irradiated. The light source may be a light emitting device capable of controlling the amount of light, for example, a light emitting diode (LED) or the like.

Using the optical flow sensor, the controller 1800 may detect a position of the mobile robot irrespective of the slip of the mobile robot. The controller 1800 may compare and analyze the image data captured by the optical flow sensor over time to calculate the moving distance and the moving direction, and calculate the position of the mobile robot on the basis of the moving distance and the moving direction. Using image information on a bottom side of the mobile robot using the optical flow sensor, the controller 1800 may perform slip-resistant correction on the position of the mobile robot calculated by another device.

The three-dimensional camera sensor may be attached to one side or a part of the main body of the mobile robot to generate three-dimensional coordinate information related to the surroundings of the main body.

In other words, the three-dimensional camera sensor may be a 3D depth camera that calculates a near and far distance of the mobile robot and an object to be captured.

Specifically, the three-dimensional camera sensor may capture a two-dimensional image related to the surroundings of the main body, and generate a plurality of three-dimensional coordinate information corresponding to the captured two-dimensional image.

In one embodiment, the three-dimensional camera sensor may include two or more cameras that acquire a conventional two-dimensional image, and may be formed in a stereo vision manner to combine two or more images obtained from the two or more cameras so as to generate three-dimensional coordinate information.

Specifically, the three-dimensional camera sensor according to the embodiment may include a first pattern irradiation unit for irradiating light with a first pattern in a downward direction toward the front of the main body, and a second pattern irradiation unit for irradiating the light with a second pattern in an upward direction toward the front of the main body, and an image acquisition unit for acquiring an image in front of the main body. As a result, the image acquisition unit may acquire an image of a region where light of the first pattern and light of the second pattern are incident.

In another embodiment, the three-dimensional camera sensor may include an infrared ray pattern emission unit for irradiating an infrared ray pattern together with a single camera, and capture the shape of the infrared ray pattern irradiated from the infrared ray pattern emission unit onto the object to be captured, thereby measuring a distance between the sensor and the object to be captured. Such a three-dimensional camera sensor may be an IR (infrared) type three-dimensional camera sensor.

In still another embodiment, the three-dimensional camera sensor may include a light emitting unit that emits light together with a single camera, receive a part of laser emitted from the light emitting unit reflected from the object to be captured, and analyze the received laser, thereby measuring a distance between the three-dimensional camera sensor and the object to be captured. The three-dimensional camera sensor may be a time-of-flight (TOF) type three-dimensional camera sensor.

Specifically, the laser of the above-described three-dimensional camera sensor is configured to irradiate a laser beam in the form of extending in at least one direction. In one example, the three-dimensional camera sensor may include first and second lasers, wherein the first laser irradiates a linear shaped laser intersecting each other, and the second laser irradiates a single linear shaped laser. According to this, the lowermost laser is used to sense obstacles in the bottom portion, the uppermost laser is used to sense obstacles in the upper portion, and the intermediate laser between the lowermost laser and the uppermost laser is used to sense obstacles in the middle portion.

On the other hand, the communication unit 1100 is connected to a terminal device and/or another device (also referred to as "home appliance" herein) through one of wired, wireless and satellite communication methods, so as to transmit and receive signals and data.

The communication unit 1100 may transmit and receive data with another located in a specific area. Here, the another device may be any device capable of connecting to a network to transmit and receive data, and for example, the device may be an air conditioner, a heating device, an air purification device, a lamp, a TV, an automobile, or the like. The another device may also be a device for controlling a door, a window, a water supply valve, a gas valve, or the like. The another device may be a sensor for sensing temperature, humidity, air pressure, gas, or the like.

Further, the communication unit 1100 may communicate with another autonomous cleaner 100 located in a specific area or within a predetermined range.

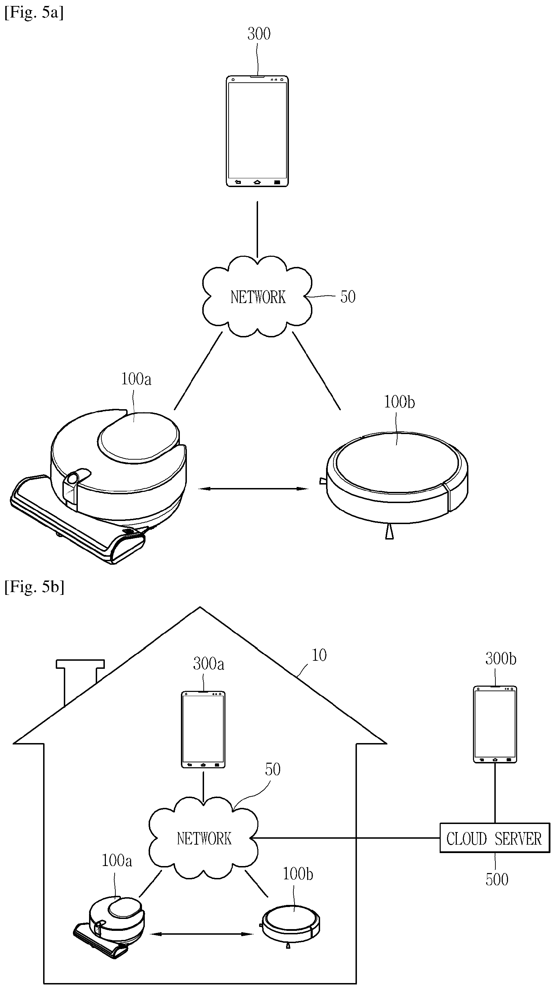

Referring to FIGS. 5A and 5B, a first cleaner 100a and a second cleaner 100b that perform autonomous traveling may exchange data with each other through network communication 50. In addition, the first cleaner 100a and/or the second cleaner 100b that perform autonomous traveling may perform a cleaning related operation or a corresponding operation by a control command received from a terminal 300 through the network communication 50 or other communication.

In other words, although not shown, a plurality of cleaners 100a, 100b that perform autonomous traveling may also perform communication with the terminal 300 through a first network communication and perform communication with each other through a second network communication.

Here, the network communication 50 may refer to short-range communication using at least one of wireless communication technologies, such as a wireless LAN (WLAN), a wireless personal area network (WPAN), a wireless fidelity (Wi-Fi) Wi-Fi direct, Digital Living Network Alliance (DLNA), Wireless Broadband (WiBro), World Inter-operability for Microwave Access (WiMAX), Zigbee, Z-wave, Blue-Tooth, Radio Frequency Identification (RFID), Infrared Data Association (IrDA), Ultrawide-Band (UWB), Wireless Universal Serial Bus (USB), and the like.

The network communication 50 may vary depending on a communication mode of the autonomous cleaners desired to communicate with each other.

In FIG. 5A, the first cleaner 100a and/or the second cleaner 100b that perform autonomous traveling may provide information sensed by the respective sensing units thereof to the terminal 300 through the network communication 50. The terminal 300 may also transmit a control command generated based on the received information to the first cleaner 100a and/or the second cleaner 100b via the network communication 50.

In FIG. 5A, the communication unit of the first cleaner 100a and the communication unit of the second cleaner 100b may also directly communicate with each other or indirectly communicate with each other via another router (not shown), to recognize information related to a traveling state and positions of counterparts.

In one example, the second cleaner 100b may perform a traveling operation and a cleaning operation according to a control command received from the first cleaner 100a. In this case, it may be said that the first cleaner 100a operates as a master and the second cleaner 100b operates as a slave. Alternatively, it may be said that the second cleaner 100b follows the first cleaner 100a. In some cases, it may also be said that the first cleaner 100a and the second cleaner 100b collaborate with each other.

Hereinafter, a system including a plurality of cleaners 100a, 100b performing autonomous traveling according to an embodiment of the present disclosure will be described with reference to FIG. 5B.

As illustrated in FIG. 5B, a cleaning system according to an embodiment of the present disclosure may include a plurality of cleaners 100a, 100b performing autonomous traveling, a network communication 50, a server 500, and a plurality of terminals 300a and 300b.

The plurality of cleaners 100a, 100b, the network communication 50 and at least one terminal 300a may be disposed in a building 10 while another terminal 300b and the server 500 may be located outside the building 10.

The plurality of cleaners 100a, 100b are cleaners that perform cleaning while traveling by themselves, and may perform autonomous traveling and autonomous cleaning. Each of the plurality of cleaners 100a, 100b may include a communication unit 1100, in addition to the traveling function and the cleaning function.

The plurality of cleaners 100a, 100b, the server 500 and the plurality of terminals 300a and 300b may be connected together through the network communication 50 to exchange data. To this end, although not shown, a wireless router such as an access point (AP) device and the like may further be provided. In this case, the terminal 300a located in an internal network may access at least one of the plurality of cleaners 100a, 100b through the AP device so as to perform monitoring, remote control and the like with respect to the cleaner. Also, the terminal 300b located in an external network may access at least one of the plurality of cleaners 100a, 100b through the AP device, to perform monitoring, remote control and the like with respect to the cleaner.

The server 500 may be directly connected in a wireless manner through the terminal 300b. Alternatively, the server 500 may be connected to at least one of the plurality of cleaners 100a and 100b without passing through the mobile terminal 300b.

The server 500 may include a programmable processor and may include various algorithms. By way of example, the server 500 may be provided with algorithms related to performing machine learning and/or data mining. As an example, the server 500 may include a speech recognition algorithm. In this case, when receiving voice data, the received voice data may be output by being converted into data in a text format.

The server 500 may store firmware information, operation information (course information and the like) related to the plurality of cleaners 100a, 100b, and may register product information regarding the plurality of cleaners 100a, 100b. For example, the server 500 may be a server operated by a cleaner manufacturer or a server operated by an open application store operator.

In another example, the server 500 may be a home server that is provided in the internal network 10 and stores status information regarding the home appliances or stores contents shared by the home appliances. If the server 500 is a home server, information related to foreign substances, for example, foreign substance images and the like may be stored.

Meanwhile, the plurality of cleaners 100a and 100b may be directly connected to each other wirelessly via Zigbee, Z-wave, Blue-Tooth, Ultra-wide band, and the like. In this case, the plurality of cleaners 100a and 100b may exchange position information and traveling information with each other.

At this time, any one of the plurality of cleaners 100a and 100b may be a master cleaner 100a and another may be a slave cleaner 100b. For example, the first cleaner 100a may be a dry cleaner that sucks dust on the cleaning floor, and the second cleaner 100b may be a wet cleaner that mops the floor cleaned by the first cleaner 100a. Furthermore, the structures and specifications of the first cleaner 100a and the second cleaner 100b may be different from each other.

In this case, the first cleaner 100a may control the traveling and cleaning of the second cleaner 100b. In addition, the second cleaner 100b may perform traveling and cleaning while following the first cleaner 100a. Here, an operation in which the second cleaner 100b follows the first cleaner 100a refers to an operation in which the second cleaner 100b performs traveling and cleaning by following the first cleaner 100a while maintaining a proper distance from the first cleaner 100a.

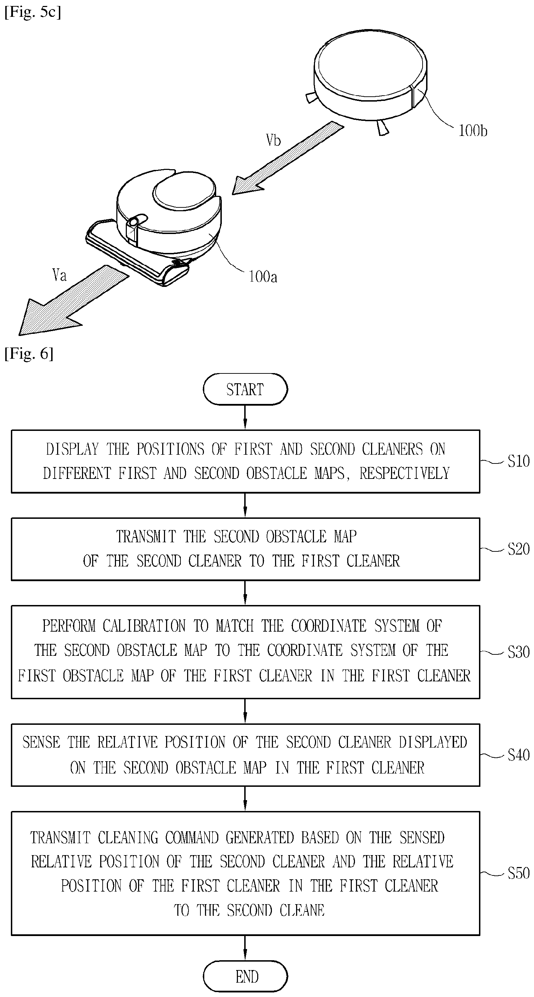

Referring to FIG. 5C, the first cleaner 100a may control the second cleaner 100b such that the second cleaner 100b follows the first cleaner 100a.

For this purpose, the first cleaner 100a and the second cleaner 100b should exist in a specific area where they can communicate with each other, and the second cleaner 100b should recognize at least a relative position of the first cleaner 100a.

For example, the communication unit of the first cleaner 100a and the communication unit of the second cleaner 100b exchange IR signals, ultrasonic signals, carrier frequencies, impulse signals, and the like, and analyze them through triangulation, so as to calculate movement displacements of the first cleaner 100a and the second cleaner 100b, thereby recognizing relative positions of the first cleaner 100a and the second cleaner 100b. However, the recognition of relative positions though such signal exchanges is based on an assumption that the first cleaner 100a and the second cleaner 100b are mounted with position sensors, respectively, or sufficiently close to each other. Accordingly, the present disclosure has proposed a method of easily obtaining the relative positions of the first cleaner 100a and the second cleaner 100b in a designated space regardless of a distance therebetween without having additional position sensors.

When the first cleaner 100a recognizes the relative position with the second cleaner 100b as described above, the second cleaner 100b may be controlled based on map information stored in the first cleaner 100a or map information stored in the server, the terminal or the like. In addition, the second cleaner 100b may share obstacle information sensed by the first cleaner 100a. The second cleaner 100b may perform an operation based on a control command (for example, a control command related to a traveling direction, a traveling speed, a stop, etc.) received from the first cleaner 100a.

Specifically, the second cleaner 100b performs cleaning while traveling along a traveling path of the first cleaner 100a. However, the traveling directions of the first cleaner 100a and the second cleaner 100b do not always coincide with each other. For example, when the first cleaner 100a moves or rotates up/down/right/left, the second cleaner 100b may move or rotate up/down/right/left after a predetermined time, and thus current advancing directions of the first and second mobile robot 100a, 100b may differ from each other.

Also, a traveling speed $(Va)$ of the first cleaner 100a and a traveling speed $(Vb)$ of the second cleaner 100b may be different from each other.

The first mobile robot 100a may control the traveling speed $(Vb)$ of the second mobile robot 100b to vary in consideration of a distance at which the first mobile robot 100a and the second mobile robot 100b can communicate with each other. For example, if the first cleaner 100a and the second cleaner 100b move away from each other by a predetermined distance or more, the first cleaner 100a may control the traveling speed $(Vb)$ of the second cleaner 100b to be faster than before. On the other hand, when the first cleaner 100a and the second cleaner 100b move close to each other by a predetermined distance or less, the first cleaner 100a may control the traveling speed $(Vb)$ of the second cleaner 100b to be slower than before or control the second cleaner 100b to stop for a predetermined time. Accordingly, the second cleaner 100b can perform cleaning while continuously following the first cleaner 100a.

In addition, although not shown, the first cleaner 100a and the second cleaner 100b may operate to divide a designated space and perform cleaning in collaboration. For this purpose, the first cleaner 100a and the second cleaner 100b may respectively have a history of cleaning the designated space at least once and an obstacle map displayed with its own position coordinate.

The obstacle map may include information related to a region in a specific space (e.g., a shape of the region, a position of the wall, a height of the floor, a position of the door/threshold, etc.), position information of a cleaner, position information of a charging station, and information on an obstacle existing in a specific space (e.g., position, size, etc. of the obstacle). Here, the obstacle may include a cliff as well as a fixed obstacle such as a wall, a furniture, a fixture, or the like, protruded from the floor of the cleaning area to obstruct traveling of the cleaner, and a moving obstacle.

The obstacle map possessed by the first cleaner 100a and the obstacle map possessed by the second cleaner 100b may be different from each other. For example, when the first cleaner 100a and the second cleaner 100b are heterogeneous or obstacle sensors (e.g., an ultrasonic sensor, a laser sensor, a radio wave sensor, an infrared sensor, a bumper, etc.) mounted thereon are different from each other, different obstacle maps may be generated even when prepared for the same space.

Furthermore, an obstacle map prepared in advance for at least a designated space prior to collaborative cleaning and map data associated therewith may be stored in each memory of the first cleaner 100a and the second cleaner 100b.

Here, each obstacle map may be implemented in the form of a 2D or 3D image or a grid map for the designated space. In addition, each obstacle map may include at least one obstacle information, for example, its own position information (i.e., the first cleaner 100a or the second cleaner 100b) as well as position information and size information of a table, a wall surface, a threshold, and the like. Furthermore, each obstacle map is the same as the shape of a designated actual space, and may be generated on the same scale as the actual space based on the measured value of the plan view.

Meanwhile, the first cleaner 100a and the second cleaner 100b may independently perform traveling and cleaning within the designated space. However, when the cleaning is carried out in a different scenario other than collaboration, it may be against the purpose of efficiently performing cleaning using a plurality of cleaners, such as the traveling trajectory of the first cleaner 100a being overlapped with the traveling trajectory of the second cleaner 100b.

Accordingly, in the present disclosure, in order to perform a collaborative/follow-up cleaning operation, a plurality of autonomous cleaners may recognize relative positions to each other in a designated space without using a position sensor.

Specifically, in the present disclosure, the first cleaner communicates with the second cleaner to receive an obstacle map displayed with the position of the second cleaner from the second cleaner. Then, the received obstacle map is calibrated on the basis of the obstacle map of the first cleaner to unify the coordinate system. Then, the first cleaner may recognize the relative position of the second cleaner using the obstacle map of the second cleaner in which the coordinate system is unified. In other words, in the present disclosure, if the first cleaner and the second cleaner each have an obstacle map for the same space, they may recognize relative positions to each other in the same space even when they have different map coordinate systems due to the use of different obstacle sensors or are not close enough to send and receive short-range wireless signals or are not mounted with position sensors.

Hereinafter, a method of allowing a plurality of autonomous cleaners to obtain relative positions to each other in a specified space according to the present disclosure will be described in detail with reference to FIG. 6.

Referring to FIG. 6, first, the process (S10) of displaying the positions of the first cleaner and the second cleaner on the first obstacle map and the second obstacle map, respectively, is started. Here, the first obstacle map and the second obstacle map denote different obstacle maps prepared in advance for the same cleaning space.

Specifically, the first obstacle map may be a grid map or a video map generated based on information collected by the first cleaner through the obstacle sensor while traveling in a specific cleaning space in the past, and the second obstacle map may be a grid map or a video map generated based on information collected by the second cleaner through the obstacle sensor while traveling in the same specific cleaning space. Here, the grid map may be generated on the basis of a plan view of a cleaning space acquired from an external server, a designated internet site, or the like. In addition, the image map may be generated by connecting and combining images acquired through a camera mounted on the cleaner.

The first obstacle map and the second obstacle map are stored in the memory of the first cleaner and the memory of the second cleaner, respectively, or stored in a controller device that controls the operation of the first cleaner and the second cleaner or a server communicating therewith.

Furthermore, the position of the first cleaner displayed on the first obstacle map and the position of the second cleaner displayed on the second obstacle map may be determined based on the position of a charging station prior to traveling as an initial position. In other words, the first cleaner and the second cleaner may be assumed to start traveling with the fixed charging station as an initial position. For this purpose, the first cleaner and the second cleaner may previously store the position information of the charging station, which is an initial position, in each memory 1700.

Next, the process (S20) of transmitting the second obstacle map of the second cleaner to the first cleaner is carried out. To this end, the first cleaner and the second cleaner are connected through network communication such as Wi-Fi, Bluetooth, or the like. At this time, the transmission of the second obstacle map may be performed according to the request of the first cleaner. Alternatively, the second obstacle map of the second cleaner prior to traveling of the first cleaner and the second cleaner may be transmitted to the first cleaner.

On the other hand, in the first cleaner that has received the second obstacle map, calibration is performed such that the coordinate system of the second obstacle map matches the coordinate system of the first obstacle map of the first cleaner (S30).

Here, calibrating the coordinate system of the second obstacle map to match the coordinate system of the first obstacle map of the first cleaner denotes that the coordinate system of the second obstacle map is transformed to match that of the first obstacle map such that the first cleaner and the second cleaner are displayed in the same coordinate system to recognize relative positions to each other.

Specifically, first, an X-Y coordinate having the center position of the first obstacle map as an origin is formed. Here, the center position may denote a point that is the center of gravity of the first obstacle map or a specific point (e.g., the position of a charging station) that is fixedly present in the relevant space. Next, the coordinate values of objects (e.g., grid cells) constituting the second obstacle map are transformed into X-Y coordinates, the Y-axis coordinate values of the transformed objects are reduced and enlarged to a preset ratio, and the X-axis coordinate values thereof are substituted into a preset X-axis coordinate value transformation function to convert the scaling. Then, calibration may be completed by performing parallel movement and/or rotational movement on the center of the X, Y axes and applying the corresponding transformation values such that the scaled second obstacle map completely overlaps with the first obstacle map.

On the other hand, in another example, the calibration may be performed on the basis of a predetermined map or a standard coordinate system instead of the first obstacle map. In this case, the calibration will be performed not only on the coordinate system of the second obstacle map but also on the coordinate system of the first obstacle map.

When the coordinate systems of the first and second obstacle maps are unified according to the execution of calibration, the first cleaner may sense the relative position of the second cleaner displayed on the second obstacle map (S40).

Furthermore, in one example, a relative position coordinate of the second cleaner may be displayed on a calibrated second obstacle map. To this end, an image of the second obstacle map displayed with the relative positions of the first cleaner and the second cleaner may be displayed on the screen of the mobile terminal 300a communicating with the first cleaner and/or the second cleaner.

Next, the first cleaner transmits a cleaning command generated based on the sensed relative position of the second cleaner and the relative position information of the first cleaner to the second cleaner (S50).

Here, the relative position information of the first cleaner may be relatively obtained based on the position coordinates of the second cleaner when the first and second obstacle maps completely overlap with each other according to the execution of calibration.

Furthermore, here, the cleaning command may be a cleaning command for a specific region selected based on the position information of the first cleaner, the obstacle information of the first or second obstacle map, and the position information of the second cleaner or a cleaning command that follows the traveling path of the first cleaner.

In one embodiment, the first cleaner transmits a transformation value corresponding to the execution of the above-described calibration to the second cleaner, thereby operating the second cleaner to recognize the relative position of the first cleaner with the position of the second cleaner in the unified coordinate system.

In addition, in one embodiment, when the second obstacle map is calibrated, the first cleaner may obtain the position coordinate of obstacle information displayed only on the first obstacle map based on the position coordinate of the second cleaner, and then transmit it. According to this, for example, when the performance of the obstacle sensor in the first cleaner is improved more than that of the second cleaner, the undetected obstacle information in the designated cleaning area may be provided more easily and quickly. Furthermore, updating of the second obstacle map of the second cleaner may be carried out easily and quickly.

Furthermore, in the present disclosure, when the second cleaner and the first cleaner divide a designated space into a plurality of areas to perform collaborative cleaning, it may be sufficient to initially obtain the relative positions of the first and second cleaners only in order to share a collaborative scenario. Alternatively, in one example, the first and second cleaners may be implemented to obtain relative positions to each other whenever cleaning of any one of the plurality of divided areas is completed.

As described above, according to the present disclosure, a plurality of autonomous travel cleaners may easily obtain relative positions to each other in a specified space without any position sensor when the plurality of autonomous cleaners perform cleaning in a follow-up or collaborative mode in the specified space.

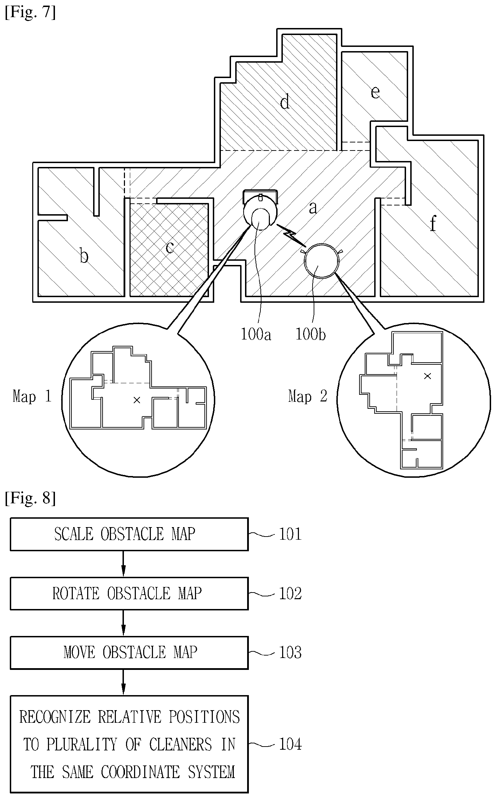

Hereinafter, FIG. 7 illustrates an example in which a plurality of autonomous cleaners perform cleaning while communicating with different obstacle maps displayed with their own positions, respectively, according to an embodiment of the present disclosure.

Referring to Fig. 7, a plan view of the determined cleaning space may be divided/ partitioned into a plurality of zones (a to f) for collaboration. Although it is illustrated in FIG. 7 that the first and second cleaners 100a, 100b are located in the same zone (a) as an example, the present disclosure is not limited thereto, and the first and second cleaners 100a, 100b may be located anywhere within the specified cleaning space.

On the other hand, different obstacle maps (Map 1, Map 2) are generated and stored in advance in the first cleaner 100a and the second cleaner 100b, respectively. At this time, the first obstacle map (Map 1) and the second obstacle map (Map 2) may be different maps generated by sensing the same cleaning space based on different sensors. For example, the first obstacle map (Map 1) may be an obstacle map using an RGBD sensor, and the second obstacle map (Map 2) may be an obstacle map based on an ultrasonic sensor or a laser sensor.

According to the calibration process described above, when the coordinate system of the first obstacle map (Map 1) matches the coordinate system of the second obstacle map (Map 2), a collaborative scenario may be generated based on relative positions to each other.

For example, a collaborative scenario in which a designated cleaning space is divided into a first group of zones (b, c), a second group of zones (e, f) and a third group of zones (a, d), and then the first cleaner 100a performs cleaning in the first group of zones (b, c) expected to draw the shortest traveling trajectory from the current position while at the same time the second cleaner 100b performs cleaning in the second group of zones (e, f) based on its own position, and both the first and second cleaners perform cleaning in the third group of zones (a, d) 100a subsequent to the completion of their own cleaning zones may be generated. On the other hand, when the cleaning completion time of the first group of zones (b, c) is different from the cleaning completion time of the second group of zones (e, f), the existing collaborative scenario may be revised or modified.

Furthermore, in one example, only a necessary part of the plurality of zones corresponding to the obstacle map may be cut off to selectively perform calibration. For example, it may be possible to reduce the complexity of calculating transformation values corresponding to scaling, rotation, and movement by removing the already cleaned zones and unifying the coordinate systems of the obstacle maps only for the remaining zones.

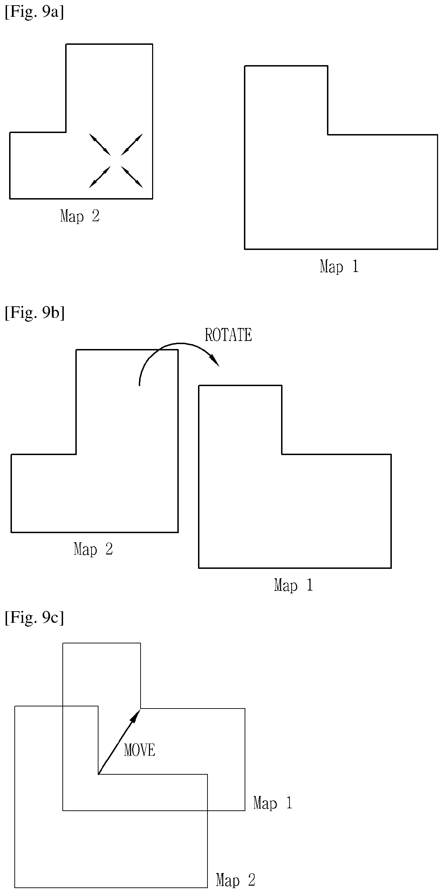

Hereinafter, a calibration process for unifying the coordinate systems of different obstacle maps according to an embodiment of the present disclosure will be described in more detail with reference to FIG. 8 and FIGS. 9A through 9E. The calibration of the obstacle maps includes a case where either one of them is transformed to completely match another one based on the another one and a case where different obstacle maps are all transformed to match a reference map.

First, as a first step of the calibration process, the process of scaling (101) an obstacle map may be carried out. For example, referring to FIG. 9A of a grid on an obstacle map in case of extended scaling, it is seen that the second obstacle map (Map 1) is extended to match the size of the second obstacle map (Map 2) based on the center point so as to perform scaling. Since the X and Y transformations for scaling have been described above, their explanation will be omitted here.

On the other hand, in one example, when the second obstacle map is larger than the first obstacle map, scaling may be carried out in a manner of being reduced based on the center point. Alternatively, scaling may be carried out on all of the plurality of obstacle maps in such a manner that the first obstacle map is reduced (extended) by a predetermined value and the second obstacle map is extended (reduced) by a predetermined value. Here, the predetermined value means a reduction or extension ratio value determined based on a predetermined coordinate system.

Next, as a second step of the calibration process, the process of rotating (102) the obstacle map may be carried out. The rotation of the obstacle map may be performed by any one of 90 degrees to the right, 90 degrees to the left, 180 degrees, vertically symmetric movement, and horizontally symmetric movement based on the current position of the second obstacle map (Map 2) similarly to a method of rotating an image. However, the present disclosure is not limited thereto, and a rotation angle ($\theta$) different from the proposed rotation angle may of course be applicable thereto. While the second obstacle map (Map 2) is rotating, the first obstacle map (Map 1) does not rotate and remains a fixed state to minimize an error.

FIG. 9B shows a case where the second obstacle map (Map 2) rotates to the right by an angle ($\theta$), which is represented by a matrix as follows. Here, tx and ty are the x and y coordinate values prior to the rotation of an arbitrary point (t).

$$\begin{bmatrix} \cos\theta & -\sin\theta \\ \sin\theta & \cos\theta \end{bmatrix} \begin{bmatrix} t_x \\ t_y \end{bmatrix}$$

Furthermore, the process of moving (103) the obstacle map simultaneously or sequentially with the second step may be carried out. Referring to FIG. 9C, the x and y values of a specific reference point may be transformed such that the coordinates (x, y) of a specific reference point match each other in a plurality of obstacle maps, and then transformed such that the x and y axes correspond to each other using a transformation function so as to perform movement/parallel movement.

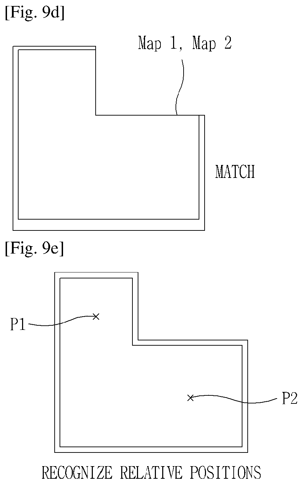

As described above, when the scaling 101, the rotation 102, and the movement 103 are performed, the plurality of obstacle maps (Map 1, Map 2) completely overlap each other as illustrated in FIG. 9D. At this time, although not shown, if necessary, the plurality of obstacle maps (Map 1, Map 2) may be corrected so as to have a completely identical shape by cropping non-overlapping boundary regions.

Now, relative positions to the plurality of cleaners may be recognized in the same coordinate system (104). Referring to FIG. 9E in this regard, since the plurality of obstacle maps (Map 1, Map 2) are recognized as a single map due to the coordinate system unification, the position coordinate (P1) of the first cleaner and the position coordinates (P2) of the second cleaner may also be recognized as if they were displayed on a single feature map (SLAM, simultaneous localization and mapping).

Here, the feature map (SLAM, simultaneous localization and mapping) denotes a map prepared for the environment of an arbitrary space while an autonomous cleaner travels the arbitrary space and measures its own position using only a sensor (e.g., an image sensor, a laser sensor, etc.) attached to the cleaner. For a specific example, the characteristic points may be detected from a ceiling or wall surface using an image sensor such as a camera mounted on the autonomous cleaner, and then the characteristic points may be repeatedly recorded to calculate the position of the cleaner, and the shape of a space may be recorded based on a sensor value sensed by a separate distance sensor from the calculated position of the cleaner using the distance sensor to prepare the feature map (SLAM).

This is distinguished from the "obstacle map" of the present specification, which is a grid map generated according to whether it is a travelable terrain on the basis of an actual traveling path, with respect to the designated space that has been traveling at least once in the past.

On the other hand, although not shown, in one embodiment, map correction or coordinate correction may be additionally carried out subsequent to the execution of calibration. Such map correction or coordinate correction may be carried out 1) in case where the map shapes (e.g., types, sizes) of a plurality of obstacle maps that have been calibrated do not completely overlap each other, or 2) in case where there is a difference between the obstacle area and the travelable area according to the performance difference of the plurality of autonomous traveling cleaners or 3) for more accurate coordinate recognition though it does not correspond to the previous two cases.

Specifically, as an example of 1), map correction may be carried out in a manner of cropping a non-overlapping boundary area of any one obstacle map in a state that the first obstacle map and the second obstacle map overlap to the maximum extent possible.

Furthermore, as an example of 2), map correction may be carried out in a manner of deleting a portion corresponding to a specific area (A) in the second obstacle map of the second cleaner when the second cleaner is unable to travel in the specific area (A) in the designated space due to a difference in the traveling performance of the autonomous cleaner. Alternatively, when there is an obstacle (B) sensed by the first cleaner alone in the designated space due to a difference in the obstacle sensing performance of the autonomous cleaner, coordinate correction may be carried out in a manner of displaying the position or area of the obstacle (B) sensed by the first cleaner alone on the second obstacle map of the second cleaner. In this case, a scheme of transmitting the first obstacle map from the first cleaner to the second cleaner may be adopted.

Furthermore, as an example of 3), when the position of a charging station is displayed on the plurality of obstacle maps (Map 1, Map 2), respectively, coordinate correction may be carried out to more accurately display a relative position between the position coordinate (P1) of the first cleaner and the position coordinate (P2) of the second cleaner by correcting a transformation value to match the position coordinate of the charging station. On the other hand, if necessary, subsequent to the execution of calibration, it may be implemented to limit map correction or coordinate correction in the manner of the above-described partial deletion or partial addition. For example, in order to continuously obtain relative positions to each other in the designated space while performing cleaning in collaboration between the first cleaner and the second cleaner, the first obstacle map and the second obstacle map may be shared with each other without additional correction. To this end, the first cleaner may send a second obstacle map in which calibration has been carried out, to the second cleaner together with its own first obstacle map.

Furthermore, in one embodiment, when the calibration of an obstacle map is completed as described above, the position coordinate of the second cleaner corresponding to a wireless signal received from the second cleaner may be continuously recognized using the first obstacle map of the first cleaner.

In addition, in one embodiment, the past positions of the first cleaner and the second cleaner as well as the current positions thereof may be displayed together with the current positions. In other words, the traveling trajectory of the second cleaner may also be displayed on the first obstacle map. Accordingly, the initial collaborative scenario may be modified or updated in an efficient direction based on the traveling trajectory of the second cleaner and the position of the first cleaner.

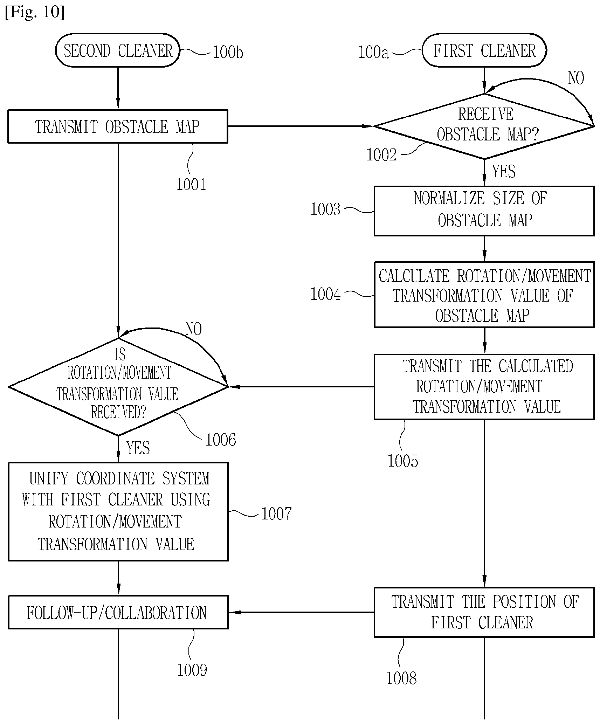

In the above, a map calibration process for allowing a plurality of autonomous cleaners to recognize relative positions in a predetermined space without a position sensor has been described in detail. Hereinafter, another method of allowing the plurality of autonomous cleaners to obtain relative positions to each other for collaborative/follow-up cleaning will be described with reference to FIG. 10.

Referring to FIG. 10, the second cleaner 100b communicating with the first cleaner 100a may transmit its own obstacle map to the first cleaner 100a (1001). At this time, the transmission of the obstacle map may be in the form of a grid map or an image. In addition, the first cleaner 100a receiving the obstacle map of the second cleaner 100b may be a main cleaner or a sub cleaner in a collaborative relationship.

Next, when the first cleaner 100a sense that the obstacle map of the second cleaner 100b has been received (1002), a size of the received obstacle map of the second cleaner 100b is normalized (1003).

Here, the normalization of the size of the obstacle map may denote that a size of the obstacle map of the second cleaner 100b is scaled to match a size of the obstacle map of the first cleaner 100a. Alternatively, it may denote that both the obstacle map of the second cleaner 100b and the obstacle map of the first cleaner 100a are adjusted to a specified scale value. For example, even when both the first obstacle map of the first cleaner and the second obstacle map of the second cleaner use the same grid map, the sizes of one cell of the grid thereof may be different from each other, and thus a size normalization process is required.

Furthermore, in one example, it may be implemented in such a manner that the first cleaner 100a changes a grid size of the first obstacle map to an actual size prior to the transmission of the first obstacle map, and transmits the resized first obstacle map to the second cleaner 100b. In this case, the size normalization process of the first obstacle map may be first performed prior to the transmission of the first obstacle map.

When the size of the obstacle map is normalized as described above, a transformation value for rotating/moving the normalized obstacle map is calculated (1004). The transformation value for rotating/moving the normalized obstacle map may be acquired by applying the X and Y values to the foregoing matrix function.

Next, the first cleaner 100a transmits the calculated rotation/movement transformation value to the second cleaner 100b (1005). When the second cleaner 100b senses the reception of the rotation/movement transformation value (1006), the received rotation/movement transformation value is applied to its own obstacle map to unify it with the coordinate system of the obstacle map of the first cleaner 100a (1007). Since then, the second cleaner 100b additionally applies the rotation/movement transformation value to the x-y coordinate whenever its own position is changed, thereby recognizing its position in the same coordinate system as the first cleaner 100a.

Accordingly, when a wireless signal corresponding to the position coordinate is received from the first cleaner 100a (1008), the second cleaner 100b may recognize not only its own position coordinate but also the position coordinate of the first cleaner 100a at the same time.

Specifically, the position coordinate of the second cleaner 100b is displayed in real time on the obstacle map of the second cleaner 100b to which the rotation/movement transformation value is applied. Besides, when the wireless signal corresponding to the position coordinate is received from the first cleaner 100a, the second cleaner 100b may display the relative position coordinate of the first cleaner 100a together on its own obstacle map unified with the obstacle map of the first cleaner 100a in the coordinate system. Through this, the second cleaner 100b may obtain its own position coordinate and the relative position coordinate of the first cleaner 100a in real time.

Next, the second cleaner 100b may perform a cleaning operation in a follow-up/collaboration mode (1009) based on its own position information acquired from its own obstacle map, the obstacle information, and the relative position of the first cleaner 100a.

For such a follow-up/collaborative operation, a shortest path algorithm such as a Dijkstra algorithm or an A* (A-star) algorithm may be applied based on the recognized relative position, for example, to generate a collaborative scenario such that the sum of the traveling paths or the traveling time periods of the first cleaner and the second cleaner is shortest. Alternatively, a collaborative scenario may be generated in which the cleaning area is divided and allocated based on the cleaning priority for the plurality of divided areas and the remaining battery amount of the first cleaner and the second cleaner.

On the other hand, a case where collaborative cleaning is carried out using two cleaners has been described as an example in the above, but the present disclosure is not limited thereto, and embodiments of the present disclosure may also be applicable to a case where three or more cleaners perform cleaning in collaboration while recognizing positions to each other.

As described above, according to the plurality of autonomous cleaners according to an embodiment of the present disclosure, the plurality of autonomous cleaners may recognize the positions of other cleaners in a designated space even without mounting position sensors to perform efficient collaborative cleaning. Furthermore, the plurality of autonomous cleaners may easily obtain relative positions to each other without additionally sharing a feature map (SLAM) even when using different cleaning maps for the same space due to different types thereof. Accordingly, the plurality of autonomous cleaners may efficiently modify or update a collaborative scenario according to the relative positions thereof even while performing collaborative cleaning.

The present disclosure described above may be implemented as computer-readable codes on a program-recorded medium. The computer readable medium includes all kinds of recording devices in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and may also be implemented in the form of a carrier wave (e.g., transmission over the Internet). In addition, the computer may also include the control unit 1800. The above detailed description should not be limitedly construed in all aspects and should be considered as illustrative. The scope of the present invention should be determined by the appended claims.

## Claims

1. An autonomous cleaner (100a), comprising:

   a traveling unit (1300) configured to move a main body (110);
   a memory (1700) in which a first obstacle map for a cleaning area is stored;
   a communication unit (1100) configured to communicate with a second cleaner (100b); and a controller (1800) configured to perform calibration on a second obstacle map received based on a coordinate system of the stored first obstacle map when the second obstacle map for the cleaning area is received from the second cleaner (100b); **characterized in that** the controller (1800) is configured to recognize a position of the second cleaner (100b) using the second obstacle map in which calibration has been carried out, and to transmit a cleaning command generated based on the position of the second cleaner (100b) and a position information of the main body (110) to the second cleaner (100b).

2. The autonomous cleaner (100a) of claim 1, wherein the controller (1800) is configured to calculate a transformation value for scaling, rotating, or moving at least one of the first and second obstacle maps to match the coordinate systems of the first and second obstacle maps so as to perform calibration on the second obstacle map.

3. The autonomous cleaner (100a) of claim 1, wherein the position information of the main body (110) is displayed on the second obstacle map in which the calibration has been carried out.

4. The autonomous cleaner (100a) of claim 1, wherein the cleaning command transmitted to the second cleaner (100b) is a cleaning command for a specific area selected based on the position information of the main body (110), obstacle information of the first or second obstacle map, and a position information of the second cleaner (100b), or a cleaning command that follows the traveling path of the autonomous cleaner (100a).

5. The autonomous cleaner (100a) of claim 1, wherein the controller (1800) is configured to recognize a position coordinate of the second cleaner (100b) corresponding to a wireless signal received from the second cleaner (100b) using the first obstacle map when the calibration is completed.

6. A plurality of autonomous cleaners comprising a first cleaner (100a) and a second cleaner (100b),

wherein the first cleaner (100a) is an autonomous cleaner (100a) according to any one of the preceding claims, and wherein the first cleaner (100a) is configured to receive the second obstacle map for the cleaning area from the second cleaner (100b), to perform calibration on the received obstacle map based on the coordinate system of its own prestored first obstacle map, and to transmit transformation data corresponding to the calibration to the second cleaner (100b); and wherein the second cleaner (100b) is configured to apply the transformation data to its own obstacle map, and to recognize a position coordinate corresponding to a wireless signal received from the first cleaner (100a) to generate a cleaning command.

7. The plurality of autonomous cleaners of claim 6, wherein the first cleaner (100a) is configured to scale, rotate or move at least one of the first and second obstacle maps to match the coordinate systems of the first and second obstacle maps so as to generate the transformation data.


**Patentansprüche**

1. Autonomer Reiniger (100a), der Folgendes umfasst:

eine Bewegungseinheit (1300), die konfiguriert ist, einen Hauptkörper (110) zu bewegen; einen Speicher (1700), in dem eine erste Hinderniskarte für einen Reinigungsbereich gespeichert ist; eine Kommunikationseinheit (1100), die konfiguriert ist, mit einem zweiten Reiniger (100b) zu kommunizieren; und eine Steuereinheit (1800), die konfiguriert ist, eine Kalibrierung bei einer zweiten erhaltenen Hinderniskarte auf der Basis eines Koordinatensystems der gespeicherten ersten Hinderniskarte auszuführen, wenn die zweite Hinderniskarte für den Reinigungsbereich vom zweiten Reiniger (100b) erhalten wird; **dadurch gekennzeichnet, dass** die Steuereinheit (1800) konfiguriert ist, eine Position des zweiten Reinigers (100b) unter Verwendung der zweiten Hinderniskarte, bei der eine Kalibrierung ausgeführt worden ist, zu erkennen, und einen Reinigungsbefehl, der auf der Basis der Position des zweiten Reinigers (100b) und von Positionsinformationen des Hauptkörpers (110) erzeugt wird, an den zweiten Reiniger (100b) zu übertragen.

2. Autonomer Reiniger (100a) nach Anspruch 1, wobei die Steuereinheit (1800) konfiguriert ist, einen Transformationswert zum Skalieren, Drehen oder Bewegen der ersten und/oder der zweiten Hinderniskarte zu berechnen, so dass die Koordinatensysteme der ersten und der zweiten Hinderniskarte übereinstimmen, um eine Kalibrierung bei der zweiten Hinderniskarte auszuführen.

3. Autonomer Reiniger (100a) nach Anspruch 1, wobei die Positionsinformationen des Hauptkörpers (110) auf der zweiten Hinderniskarte angezeigt werden, bei der die Kalibrierung ausgeführt worden ist.

4. Autonomer Reiniger (100a) nach Anspruch 1, wobei der Reinigungsbefehl, der an den zweiten Reiniger (100b) übertragen wird, ein Reinigungsbefehl für einen bestimmten Bereich ist, der auf der Basis von Positionsinformationen des Hauptkörpers (110), von Hindernisinformationen der ersten oder der zweiten Hinderniskarte und von Positionsinformationen des zweiten Reinigers (100b) ausgewählt wird, oder ein Reinigungsbefehl ist, der dem Bewegungspfad des autonomen Reinigers (100a) folgt.

5. Autonomer Reiniger (100a) nach Anspruch 1, wobei die Steuereinheit (1800) konfiguriert ist, eine Positionskoordinate des zweiten Reinigers (100b) entsprechend einem drahtlosen Signal, das vom zweiten Reiniger (100b) erhalten wird, unter Verwendung der ersten Hinderniskarte zu erkennen, wenn die Kalibrierung beendet ist.

6. Mehrzahl autonomer Reiniger, die einen ersten Reiniger (100a) und einen zweiten Reiniger (100b) umfasst,

wobei der erste Reiniger (100a) ein autonomer Reiniger (100a) nach einem der vorhergehenden Ansprüche ist, und wobei der erste Reiniger (100a) konfiguriert ist, die zweite Hinderniskarte für den Reinigungsbereich vom zweiten Reiniger (100b) zu erhalten, eine Kalibrierung bei der erhaltenen Hinderniskarte auf der Basis des Koordinatensystems seiner eigenen zuvor gespeicherten ersten Hinderniskarte auszuführen, und Transformationsdaten entsprechend der Kalibrierung an den zweiten Reiniger (100b) zu übertragen; und wobei der zweite Reiniger (100b) konfiguriert ist, die Transformationsdaten bei seiner eigenen Hinderniskarte anzuwenden, und eine Positionskoordinate entsprechend einem drahtlosen Signal, das vom ersten Reiniger (100a) erhalten wird, zu erkennen, um einen Reinigungsbefehl zu erzeugen.

7. Mehrzahl autonomer Reiniger nach Anspruch 6, wobei der erste Reiniger (100a) so konfiguriert ist, dass er die erste und/oder zweite Hinderniskarte skaliert, dreht oder bewegt, so dass die Koordinatensysteme der ersten und der zweiten Hinderniskarte übereinstimmen, um die Transformationsdaten zu erzeugen.

**Revendications**

1. Appareil de nettoyage autonome (100a), comportant :

une unité de déplacement (1300), configurée pour déplacer un corps principal (110) ; une mémoire (1700) dans laquelle est stockée une première carte d'obstacles pour une zone de nettoyage ; une unité de communication (1100) configurée pour communiquer avec un second appareil de nettoyage (100b) ; et une commande (1800) configurée pour effectuer un calibrage sur une seconde carte d'obstacles reçue sur la base d'un système de coordonnées de la première carte d'obstacles stockée lorsque la seconde carte d'obstacles pour la zone de nettoyage est reçue du second appareil de nettoyage (100b) ; **caractérisé en ce que** la commande (1800) est configurée pour reconnaître une position du second appareil de nettoyage (100b) en utilisant la seconde carte d'obstacles dans laquelle le calibrage a été effectué, et pour transmettre une instruction de nettoyage générée sur la base de la position du second appareil de nettoyage (100b) et d'une information de position du corps principal (110), au second appareil de nettoyage (100b).

2. Appareil de nettoyage autonome (100a) selon la revendication 1, dans lequel la commande (1800) est configurée pour calculer une valeur de transformation pour une mise à l'échelle, une rotation ou un déplacement d'au moins une carte parmi les première et seconde cartes d'obstacles pour faire concorder les systèmes de coordonnées des première et seconde cartes d'obstacles de manière à effectuer un calibrage sur la seconde carte d'obstacles.

3. Appareil de nettoyage autonome (100a) selon la revendication 1, dans lequel l'information de position du corps principal (110) est affichée sur la seconde carte d'obstacles dans laquelle le calibrage a été effectué.

4. Appareil de nettoyage autonome (100a) selon la revendication 1, dans lequel l'instruction de nettoyage transmise au second appareil de nettoyage (100b) est une instruction de nettoyage pour une zone spécifique sélectionnée sur la base de l'information de position du corps principal (110), d'informations d'obstacles de la première ou seconde carte d'obstacles, et d'une information de position du second appareil de nettoyage (100b), ou une instruction de nettoyage qui suit le trajet de déplacement de l'appareil de nettoyage autonome (100a).

5. Appareil de nettoyage autonome (100a) selon la revendication 1, dans lequel la commande (1800) est configurée pour reconnaître une coordonnée de position du second appareil de nettoyage (100b) correspondant à un signal sans fil reçu du second appareil de nettoyage (100b) en utilisant la première carte d'obstacles lorsque le calibrage est terminé.

6. Pluralité d'appareils de nettoyage autonomes comportant un premier appareil de nettoyage (100a) et un second appareil de nettoyage (100b),

dans laquelle le premier appareil de nettoyage (100a) est un appareil de nettoyage autonome (100a) selon l'une quelconque des revendications précédentes, et dans laquelle le premier appareil de nettoyage (100a) est configuré pour recevoir la seconde carte d'obstacles pour la zone de nettoyage provenant du second appareil de nettoyage (100b), pour effectuer un calibrage sur la carte d'obstacles reçue sur la base du système de coordonnées de sa propre première carte d'obstacles pré-stockée, et pour transmettre des données de transformation correspondant au calibrage au second appareil de nettoyage (100b) ; et
dans laquelle le second appareil de nettoyage (100b) est configuré pour appliquer les données de transformation à sa propre carte d'obstacles, et pour reconnaître une coordonnée de position correspondant à un signal sans fil reçu du premier appareil de nettoyage (100a) afin de générer une instruction de nettoyage.

7. Pluralité d'appareils de nettoyage autonomes selon la revendication 6, dans laquelle le premier appareil de nettoyage (100a) est configuré pour mettre à l'échelle, faire tourner ou déplacer au moins une carte parmi les première et seconde cartes d'obstacles pour faire concorder les systèmes de coordonnées des première et seconde cartes d'obstacles de manière à générer les données de transformation.

[Fig. 1]

[Fig. 2]

[Fig. 3]

100

155

130   110

150

140

123   120   129   111a 111b
111

[Fig. 4]

1600

POWER SUPPLY
UNIT

1100            1800            1500

COMMUNICATION
UNIT                            OUTPUT UNIT

1200                            1700

INPUT UNIT      CONTROLLER      MEMORY

1400                            1300

SENSING UNIT                    MOVING UNIT

CLEANING UNIT

1900

[Fig. 5a]

[Fig. 5b]

[Fig. 5c]

[Fig. 6]

```
                          ┌──────────┐
                          │  START   │
                          └──────────┘
                               │
   ┌───────────────────────────────────────────────────────┐
   │  DISPLAY THE POSITIONS OF FIRST AND SECOND CLEANERS ON │── S10
   │  DIFFERENT FIRST AND SECOND OBSTACLE MAPS, RESPECTIVELY│
   └───────────────────────────────────────────────────────┘
                               │
   ┌───────────────────────────────────────────────────────┐
   │           TRANSMIT THE SECOND OBSTACLE MAP            │── S20
   │       OF THE SECOND CLEANER TO THE FIRST CLEANER       │
   └───────────────────────────────────────────────────────┘
                               │
   ┌───────────────────────────────────────────────────────┐
   │    PERFORM CALIBRATION TO MATCH THE COORDINATE SYSTEM OF│
   │  THE SECOND OBSTACLE MAP TO THE COORDINATE SYSTEM OF THE│── S30
   │ FIRST OBSTACLE MAP OF THE FIRST CLEANER IN THE FIRST CLEANER│
   └───────────────────────────────────────────────────────┘
                               │
   ┌───────────────────────────────────────────────────────┐
   │ SENSE THE RELATIVE POSITION OF THE SECOND CLEANER DISPLAYED│── S40
   │   ON THE SECOND OBSTACLE MAP IN THE FIRST CLEANER      │
   └───────────────────────────────────────────────────────┘
                               │
   ┌───────────────────────────────────────────────────────┐
   │ TRANSMIT CLEANING COMMAND GENERATED BASED ON THE SENSED│
   │ RELATIVE POSITION OF THE SECOND CLEANER AND THE RELATIVE│── S50
   │  POSITION OF THE FIRST CLEANER IN THE FIRST CLEANER    │
   │              TO THE SECOND CLEANE                      │
   └───────────────────────────────────────────────────────┘
                               │
                          ┌──────────┐
                          │   END    │
                          └──────────┘
```

[Fig. 7]

Map 1                    100a    100b                    Map 2

[Fig. 8]

| | |
|---|---|
| SCALE OBSTACLE MAP | ~ 101 |
| ROTATE OBSTACLE MAP | ~ 102 |
| MOVE OBSTACLE MAP | ~ 103 |
| RECOGNIZE RELATIVE POSITIONS TO PLURALITY OF CLEANERS IN THE SAME COORDINATE SYSTEM | ~ 104 |

[Fig. 9a]

Map 2

Map 1

[Fig. 9b]

ROTATE

Map 2

Map 1

[Fig. 9c]

MOVE

Map 1

Map 2

[Fig. 9d]

Map 1, Map 2

MATCH

[Fig. 9e]

P1

P2

RECOGNIZE RELATIVE POSITIONS

[Fig. 10]

SECOND CLEANER — 100b      100a — FIRST CLEANER

TRANSMIT OBSTACLE MAP — 1001

RECEIVE OBSTACLE MAP? — 1002 — NO / YES

NORMALIZE SIZE OF OBSTACLE MAP — 1003

CALCULATE ROTATION/MOVEMENT TRANSFORMATION VALUE OF OBSTACLE MAP — 1004

TRANSMIT THE CALCULATED ROTATION/MOVEMENT TRANSFORMATION VALUE — 1005

IS ROTATION/MOVEMENT TRANSFORMATION VALUE RECEIVED? — 1006 — NO / YES

UNIFY COORDINATE SYSTEM WITH FIRST CLEANER USING ROTATION/MOVEMENT TRANSFORMATION VALUE — 1007

FOLLOW-UP/COLLABORATION — 1009

TRANSMIT THE POSITION OF FIRST CLEANER — 1008

**EP 3 813 623 B1**

**REFERENCES CITED IN THE DESCRIPTION**

**Patent documents cited in the description**

- WO 2017188708 A2

- US 2018074508 A1